# EUROPEAN PATENT SPECIFICATION

(11) **EP 2 573 686 B1**
(45) Date of publication and mention of the grant of the patent: **06.04.2022**
(21) Application number: 11182757.2
(22) Date of filing: 26.09.2011
(51) Int. Cl.: G06F 16/00, G06F 16/957

(54) **Presentation of multimedia objects at user devices**
Präsentation von Multimediaelementen auf Benutzergeräten
Présentation d'objets multimédia sur des dispositifs d'utilisateur

(43) Date of publication of application: 27.03.2013
(73) Proprietor: Vodafone Holding GmbH, 40213 Düsseldorf (DE)
(72) Inventor: Palm, Jörg, D-41470 Neuss (DE); Singh, Rajiv, D-40545 Düsseldorf (DE)
(74) Representative: Jostarndt Patentanwalts-AG

(56) References cited:
- EP-A1- 1 701 508
- US-A1- 2005 071 758
- MA WEI-YING ET AL: "Framework for adaptive content delivery in heterogeneous network environments", INTERNET CITATION, [Online] XP002168331, Retrieved from the Internet: URL:http://www.cooltown.hp.com/papers/adco n/MMCN2000> [retrieved on 2001-05-28]

## Description

The invention relates to the presentation of multimedia objects at user devices. More specifically, the invention is related to a method and a system for presenting a multimedia object on a user device. The user device may particularly be a mobile communication device.

Electronic documents, such as web pages, which users download from a content server in the Internet or another source for rendering at their user devices can include embedded multimedia objects like animated graphics, videos or similar. Such multimedia objects can have a special format and may require special software for rendering, which is often referred to as player. The software may provide a so-called plugin to be embedded into a viewing program executed in the user device for viewing the document content, such as a web browser. An example of such player is the Flash Player by Adobe, Inc., for rendering Flash objects (particularly SWF objects).

The player software usually has to be installed in the user device in a process which is controlled by the user, who has to select and download the correct player software, or at least involving the assistance of the user of the device. This may be cumbersome for the user and some user may be suspicious of installing software on their device. Moreover, some user device may not support the required permanent installation of the player software.

The article "a framework for adaptive content delivery in heterogeneous network environments of Wei-Ying Ma et al. (http://www.cooltown.hp.com/papers/adcon/MMCN2000) discloses a method for presenting multimedia objects at a user device, where a decision engine determines, whether to launch a particular content adaptation algorithm for a particular object. The decision engine receives device capabilities via user preferences submitted to the decision engine. Such information shall not be retrieved from a header request due to lacking reliability of the header content. The decision making can take place in the server, the proxy, the client or combinations thereof.

US 2005/0071758 A1 discloses techniques for selecting alternative content views for rendering. Using these techniques, content designers specify alternative content views that are designed for use under different conditions, and a particular alternative view is programmatically selected (according to applicable conditions) when the content is to be rendered. Preferably, the alternative views are provided on a component-level basis, where the selected component view or version then forms part of a larger view (such as a Web page). Optionally, more than one component may be designed to vary simultaneously. In this case, the components may vary independently of one another.

EP 1 701 508 A1 discloses a method for providing a network client with a data object residing on a network server, said method comprising: receiving a first request for a data object from a first network client; retrieving the requested data object from the network server; determining whether a selection criterion of a plurality of selection criteria is satisfied; selectively transcoding the data object according to a first selection criterion of the plurality of selection criteria and providing the trans-coded data object to the first network client, if determined that the first selection criterion is satisfied; and providing the data object retrieved from the network server to the first network client, if no selection criterion of the plurality of selection criteria is satisfied.

The invention is set out by the appended claims.

The object is achieved by a method according to claim 1, by a computer program according to claim 8 and by a system according to claim 9. Embodiments of the method, the computer program and the system are given in the dependent claims.

According to a first aspect, the invention suggests a method for presenting a multimedia object at a user device. The multimedia object has a predetermined format and is embedded into a document. Based upon a feature of the user device a detection function is executed, the detection function determining that the document includes the multimedia object of the predetermined format, and based upon the determination a multimedia player function is invoked in the user device, the multimedia player function being adapted to render the multimedia object.

According to a further aspect, the invention suggests a system for presenting a multimedia object at a user device, the multimedia object having a predetermined format and being embedded into a document. The system comprises a unit for executing a detection function based upon a feature of the user device, the detection function being adapted to determine that the document includes the multimedia object of the predetermined format, and the system being adapted to provide in the user device a multimedia player function based upon the determination, the multimedia player function being adapted to render the multimedia object.

It is an advantage of the invention that a multimedia player function for rendering the multimedia object is invoked automatically when a detection function detects that the multimedia object is embedded into a web page. Thereby, the rendering of the multimedia object is simplified for the user. Advantageously, the detection function is executed based upon a feature of the user device. This allows executing the detection for selected user devices having a predetermined feature instead of all user devices. The feature may comprise an identification and/or a type of the user device. The predetermined device types may include the user devices which do not support a permanent installation of player software for rendering the multimedia object.

In one embodiment of the method, the computer program and the system, the detection function determines that document includes the multimedia object of the predetermined format as a result of a routine check whether a received document includes at least one multimedia object of the predetermined format. Such a routine check ensures that any multimedia objects included in web pages are detected and rendered by the multimedia player function.

In one example of the method, the computer program and the system, the detection function is executed in the user device. In a related example of the method, the computer program and the system, based upon the feature of the user device a server determines the feature of the user device and modifies the document to include into the document a command to execute the detection function. Furthermore, in one example of the method, the computer program and the system, based upon the feature of the user device the server provides the detection function to the user device together with the document. The server may be a proxy server via which the user device retrieves the document from a content server providing the document.

In addition to the detection function, the server may also provide the multimedia player function to the user device. Thus, the detection function and the multimedia player function can be provided by one source. The server may provide the detection function upon a request of the user device, which may be made due to the command to execute the detection function included in the web page.

A further embodiment of the method, the computer program and the system provides that upon detecting the multimedia object, a reference to a further multimedia player is replaced by a reference to the multimedia player function such that the multimedia content is rendered by the multimedia player function. Thus, the multimedia object can be rendered using a multimedia play function instead of a further multimedia player which is envisaged for rendering in the original web page. In particular, the multimedia play function can be used in case the user device does not support an installation of the further multimedia player.

The multimedia player function converts the multimedia object into a second format, the second format being a standard format that can be rendered by a browser program of the user device. A standard format may be support by the browser program in its usual basic configuration. It is an advantage of this embodiment that the multimedia object can be rendered using ordinary browser programs and installation of further rendering functions in the user device are not required.

The document including the multimedia object may be a web page. This does not necessarily mean that the web page or other document fully includes the multimedia content of the multimedia object when it is provided by a server. Herein, terms referring to a multimedia object being "included" or "embedded" in a document to objects including references to their multimedia content. Such content may be retrieved from a source specified in the objects when the objects are to be rendered in a user device. The source may be the server also providing the web page.

Furthermore, in one embodiment of the method, the user device is a mobile communication device and the server is included in mobile communication network to which the mobile communication device can be connected.

The aforementioned and other aspects of the invention will be apparent from and elucidated with reference to the embodiments described hereinafter making reference to the accompanying drawings.

In the drawings,
- Fig. 1: is a schematic depiction a user device retrieving a document including a multimedia object from a content server via proxy server and
- Fig. 2: is a schematic depiction of steps for rendering a multimedia object.

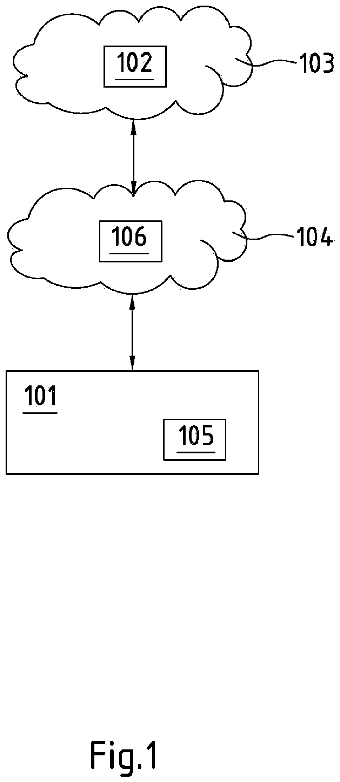

In the schematic depiction of figure 1, a user device 101 can retrieve electronic documents from content server 102. The user device 101 can be connected to the content server 102 through one or more networks. In the configuration which is depicted in figure 1 by way of example, the content server 102 is located in a first network 103 which may be the Internet, for example, and which may include further content servers, which are not shown in the figure. The user device 101 can access the content server 102 and further entities in the first network 103 through a second network 104.

In specific embodiments, the second network 104 comprises a wireless access part and the user device 101 can connect to the second network 102 wirelessly. The second network 104 can particularly be a mobile communication network including a wireless access network for connecting thereto and a provider core network including central units for providing mobile communication services. The mobile communication network may configured as a mobile communication network according to a 2G, 3G or 4G network as specified by the 3GPPP, for example, or may be a mobile communication network of another type. Likewise, the second network 104 may include a public or private Wireless LAN (Local Area Network) or similar wireless network providing the wireless part of the second network 102. The wireless part may optionally be coupled to a provider network of a communication services provider and through this network, which also forms part of the second network 102, the wireless part may be coupled to the first network 102, if a direct coupling is not provided. However, the configuration of the second network 104 as a wireless network is optional. The second network 104 may likewise be a wired network to which the user devices 101 can be connected through a suitable wired connection. In some configuration of the wired implementation, the second network 104 may likewise comprise a provider network which includes centrally operated units of a communication services provider.

The user device 101 may be a mobile communication device, such as a smartphone, a notebook computer or the like. This implementation may particularly be provided, when the second communication network 102 includes a mobile communication network or another wireless network. In further embodiments, the user device 101 may be stationary computer device, such as a personal computer (PC), which disposes of a wired or wireless interface for connecting the device to the second network 102. The user device 101 comprises in addition to the communication interface for connecting to the second network 104 a processor unit coupled to a memory unit, which are not shown in figure 1. The processor and memory control basic functionality of the user device 101, which may be provided by an operating system of the device, and they allow for executing further software programs. The software programs as well as control data and user data are stored in the memory of the user device.

One software program installed on the user device 101 is a program for viewing web documents, particularly web pages, which are provided by the content server 105 and further content servers in the first network 101. The program may be web browser which is as such known to a person skilled in the art and which supports a variety of web technologies for creating and rendering web documents and interacting therewith, such as HTML (Hypertext Markup Language) and JavaScript. Examples of such browsers are Mozilla Firefox, Microsoft Internet Explorer, Apple Safari and similar. The web browser and its functional range may be adapted to the type of the user device 101. Thus, if the user device 101 is a mobile communication device, the web browser may have a functional range from the web browser which is used in a user device 101, which is configured as a personal computer, for example.

The content server 102, which is shown by way of example in figure 1, is a web server which provides web documents which are configured as web pages and which can be accessed by the user device 101 through the first and second networks 103, 104. The web pages may include standard web content, which may be rendered at a display unit of the user device 101 by the web browser 105 of the user device 101 using functionality included in the basic configuration of the web browser 105. This particularly means that such content can be rendered by the web browser 105 by interpreting the content of the web page without required modifications of the web page. Moreover, the content can be rendered without adaptions of the web browser 105 exceeding its basic configuration such as the installation of so called plugins or other extensions. This content of the web page may be based on HTML, JavaScript or other technologies the web browser 105 supports in its basic configuration.

In addition to the standard web content, web pages provided by the content server 102 include multimedia objects of a special format. The objects are embedded into the web pages and may provide content such as animated graphics including animation of text, drawings and still images and/or videos. In addition, the objects may capture user inputs made at a user input interface of the user device 101 to control the object based upon the user inputs and/or to communicate the user inputs to the content server 102, the supporting interactivity between the objects and the user of the user device 101. The content of the multimedia object may not be included in the web page firstly delivered, but the web page may include a web link referring to the content stored in the content server 102. Using the link, the content may be retrieved from the content server 102, when the multimedia objects are to be rendered in a user device 101, as described before. In addition to the link, the web page may include parameters for rendering the multimedia object, which are observed by the user device 101. For instance, the parameter may include the size of the field of the web page in which the multimedia object is rendered. Within the web page, the link and the parameters and possible further information may be included in a code portion of the web page, which is also referred to as multimedia object construct hereinafter. Examples of multimedia objects are Flash objects, particularly SWF objects, created using the Adobe Flash platform.

As it is particularly the case for Flash objects, the web browser 105 of the user device 101 is not able to render the multimedia objects within the scope of its usual basic configuration, i.e. particularly the configuration in which the web browser is delivered. Rather, player software has to be installed on the user device 102 which allows for rendering of the multimedia objects at the user device 102. The player software may add a plugin to the web browser 105 thereby enabling the web browser 105 to render the multimedia objects. If the multimedia objects are Flash objects, the player software is the Adobe Flash player. In order to invoke the player software for rendering the multimedia objects, the multimedia objects include a reference to the player software. Due to this reference, the embedded multimedia object is rendered with the player software when the web page is processed by the web browser 105.

In the following, it is assumed that the player software is not installed on the device. In general, reasons for the absence of the player software can be that the user of the user device 101 is not willing to install the player software or that does not know hat to install the player software. A further reason can be that the user device 101 does not support the installation of the player software. This may be the case for user devices 101 of certain types. In the following, it is assumed that the user device 101 belongs to such type so that the user device 101 does not allow installing the player software thereon.

Herein, a way is described that allows for presenting multimedia objects to the user devices 102 of such type without having to install the special player software. Instead of the special player software, a multimedia player function is used for rendering the multimedia objects at the user device 101. The multimedia player function is implemented using standard technologies supported by the web browser 105 in its basic configuration. In particular, the multimedia player function may be implemented using JavaScript. The multimedia player function includes a library for converting the multimedia object into a second format which is a standard format that can be rendered using standard functionality of the web browser 105.

This means that the converted object can be rendered within the scope of the basic configuration of the web browser 105. In one implementation, the standard format may particularly be one or more of the formats SVG (Scalable Vector Graphics), HTML5 and CSS3 (Cascading Style Sheets 3), which are supported by essentially all modern web browsers. In one implementation, the multimedia player function may employ the Gordon runtime, one version of which is available in the Internet under https://github.com/tobeytailor/Gordon, for converting the multimedia object.

In one embodiment, enabling the user device 102 to render the multimedia object involves functions of a proxy server 106 which is located in the second network 104 through which the user device 102 accesses the first network 103 in the configuration shown in figure 1. If the second network 102 includes a communication provider network, the proxy server 106 may be operated by the communication provider. All or a predetermined part of the web traffic between the user device 101 and the first network 101 is lead via the proxy server 106. In addition to and basically independent of the functionality, which enables the user device to render the multimedia object and which is described in more detail below, the proxy server 106 may provide further functionality.

For instance, the proxy server 106 may provide a web cache that stores content when it is forwarded from the first network 103 to a user device 101 connected with the second network 102 and that provides the same content to a user device 101 instead of the original content server 102 when further user devices 101 request the same content. Furthermore, the proxy server may filter and/or adapt content that is to be transmitted to a user device 101. Filtering may include blocking malicious software. And In particular, if the second network 104 is a mobile communication network, the content adaption in the proxy server 106 may include compressing objects, such as pictures or videos, in order to reduce the data load in the wireless part of the mobile communication network and/or adapting content to certain features of mobile communication devices, such as their limited screen size. In addition or as an alternative, further functions of a proxy which as such are known to a person skilled in the art can be implemented in the proxy server.

In addition, the proxy server executes functions for enabling the user device 101 to render the multimedia objects. This function can be added to existing functionality of a proxy server 106 already being operated in the second network 104. Thus, an existing proxy can be adapted and there is no need to provide a new proxy server 106.

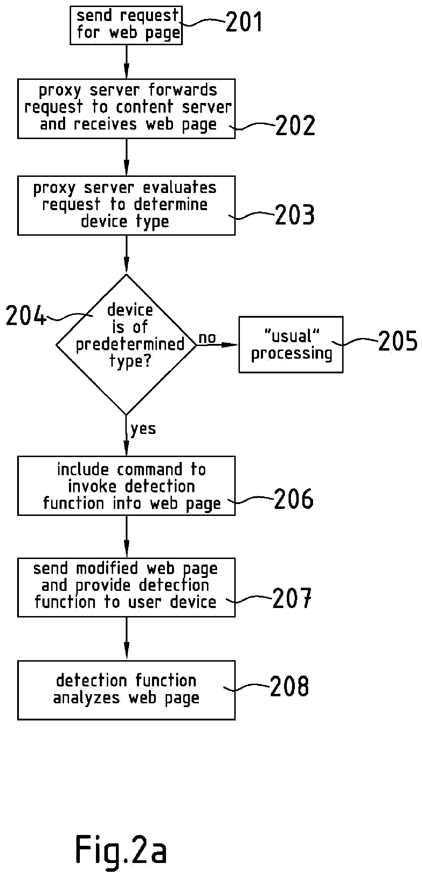

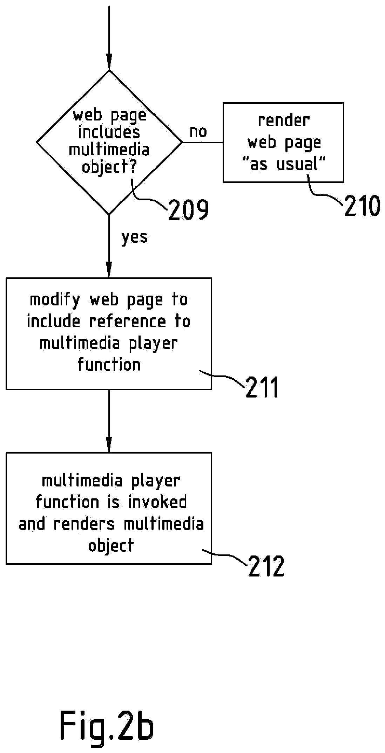

Making reference to figure 2, the transmission of a web page including a multimedia object to the user device 1 begins with a request of the web page by the user device, which may be sent from the user device 101 in step 201 upon a corresponding user input. Within the second network 104, the request is passed to the proxy server 106. The proxy server 106 forwards the request to the content server 102 and receives the requested web page from the content server 102 in step 202, if the requested web page is not stored in a web cache of the proxy server 106. In case the web page is already stored in the web cache, the proxy server may retrieve the requested web page from the web cache.

Moreover the proxy server 106 evaluates the request in step 203 and determines, whether the user device 101 belongs to a predetermined device type. This evaluation may be made upon receiving the web page from the content server 102 as depicted in figure 2 or it may be already be made upon receipt of the request in the proxy server 10 before the request is forwarded to the content server 102 and/or before the web page is received in the response from the content server 102. The predetermined device types include the types of user devices 101 which do not support the installation of the special player software for rendering the multimedia object. The determination of the type of the user device 101 may be made using information, which is sent from the user device 101 when it retrieves the web page including the multimedia object from the content server 102. In one implementation, the request or a further message sent in connection with the request may include information about the device type of the user device 101 and the proxy server 106 may read the device type directly from the request or further message. Within the request, the device type may be specified in a "user agent" field provided by the HTML specifications. As an example, the further message may be sent to the second network 102 in the process for registering the user device 101 in the second network 102 for the session in which the web page is requested.

When the proxy server 101 does determine in step 204 as a result of the evaluation described before that the user device 101 is not of the predetermined type, the request is processed in the "usual" way (step 205). This may include forwarding the web page to the user device 101 without special processing in view of the embedded multimedia object. If the proxy server 106 determines that the user device 101 is of the predetermined type, it modifies the web page to include a command to invoke a program including the detection function, when the web page is received and processed in the web browser of the user device 101 in step 206. The detection function is able to detect multimedia objects of the given format within a web page and is a software code which is preferably executable by means of the web browser in its basic configuration. In one implementation, the detection function is implemented using JavaScript.

In one embodiment, the program only includes the detection function. The detection function can be implemented such that it includes only a small amount of software code. Thus, the provision of the detection function in addition to the web page does not significantly increase the data amount to be transmitted to the user device 101. In a further embodiment, the detection function is one module of a program which also includes the multimedia player function or at least part thereof. In this embodiment, the multimedia player function or the relevant part thereof is provided to the user device 101 by the proxy server 106 together with the detection function. In case the program includes both the detection function and the multimedia player function or part thereof, the detection function is started at first upon invocation of the program. As will also be explained below, the multimedia player function included in the program is executed at a later point in time, if a multimedia object is to be rendered.

The modified web page is transmitted to the user device 101 and the program including the detection function is provided to the user device 101 as depicted in step 207.The program may be transmitted to the user device 101 in addition to web page on the initiative of the proxy server 106. As an alternative, the web browser may retrieve the program from the proxy server 106 or another server due to the command which is included in the modified web page and refers to the detection function. The program including the detection function may be declared cachable such that the web browser can store the program in its cache when it has received it once due to a command included in a first web page. When a second web page including a command referring to the program is received, the web browser may retrieve the program from its cache instead of the proxy server or another server. This reduces network traffic and is particularly advantageous, when the program includes the multimedia player function and thus comprises a greater data amount.

After the program is invoked by the web browser due to the command included in the web page, the detection function analyzes the web page in step 208 to detect multimedia objects of the given format embedded into the web page. This may be done by evaluating, if the web page includes commands or other content, which is typical for such multimedia objects. As a result of the analysis of the web page the detection function judges in step 209 whether the web page includes a multimedia object. If it is judged that the web page does not include a multimedia object of the given format, the detection function allows the browser to render the web page in the "usual" way (step 210). If the detection function determines that a multimedia object is embedded in the web page, it modifies the web page to include a reference to the multimedia player function in connection with every detected multimedia object in step 211. The modification may comprise replacing a reference to the special player which is included in the web page by a reference to the multimedia player function. The new reference instructs the web browser of the user device 101 to invoke the multimedia player function instead of the special player, which the web browser would try to invoke due to the references in the original web page.

The replacement of the reference to the special player by the reference to the multimedia player function may include replacing the multimedia object construct (i.e. the code portion of the web page referring to the multimedia object) originally included in the web page by a new construct referring to the multimedia player function. The new construct is a code portion of the web page, which may prompt the web browser of the user device 101 to invoke the multimedia player function, which may be specified in the new construct. If the original construct includes a link referring to the content of the multimedia object and parameters for rendering the multimedia object, the link and the parameters are preferably included in the new construct.

After the replacement of the references to the special player by the references to the multimedia player function, the detection function allows the web browser of the user device 101 to render the web page. Due to the new references incorporated into the web page, the web browser invokes the multimedia player function and the multimedia player function renders the multimedia objects embedded into the web page in step 212. As described before, this may include retrieving the content of the multimedia object from the content server 102 using the link included in the new multimedia object construct. A request to retrieve the content is preferably sent via the proxy server 106 and the proxy server 106, and in case the content is stored in the web cache of the proxy server 106, the proxy server 106 may not forward the request to the content server and provide to the user device 101 the content from its web cache.

In a refinement of the embodiment described before, the detection function includes into the new construct a modified link to the content of the multimedia object instead of the link included in the original construct or web page. The new links refers to a predetermined web address and includes the reference of the original link as additional information. The predetermined web address may be provided by the proxy server 106 or another predetermined secure server and redirects a request to the address specified in the additional information, i.e. the original reference of the link referring to the content server 102. Thus, the web browser does not request the content directly from the content server 102, but via a further web address. From this web address, the browser is redirected to the content server. Hereby, security against attacks with malicious flash objects is improved, since the request is made via a secure server.

As described before, the multimedia player function may be provided to the user device together with the detection function in one program. In this embodiment, the multimedia player function received together with the detection function is invoked to render the multimedia object in step 212. If the multimedia player function has not been provided within the program including the detection function, the web browser of the user device 101 may retrieve the multimedia player function from the proxy server 106 or from another server, which is specified in the modified web page, particularly in the references to the multimedia player function included in the web page modified by the detection function. The same is done for parts of the multimedia player function which may not be included in the program provided the user device 101 before. However, the multimedia player function or its parts to be retrieved separately may be declared cachable such that the web browser can store the multimedia player function in its cache when it has received it once. In this embodiment, the web browser may retrieve the multimedia player function from its cache instead of the proxy server or another server, when the multimedia player function is to be invoked. Thus, the multimedia player function does not have to be transmitted to the user device each time a web page including a multimedia object is rendered.

Thus, the multimedia object can be rendered at a user device 101 which does not support the installation of the special player for rendering the multimedia object. And, the rendering of the multimedia object does not require the assistance of the user. As a consequence the rendering of the multimedia content is simplified for the user of the user device. This is particularly achieved by the detection function which detects multimedia objects on a routine basis and includes references to the multimedia player function into the web page. Here, analysis on a routine basis particularly means that every web page provided to a user device 101 of the predetermined device type is evaluated by the detection function.

In a further embodiment, the detection function does not modify every webpage including a multimedia object of the predetermined format. There may be specified predetermined webpages, which are not to be modified. This may be due to privacy requirements or as a security measure, for example. The predetermined webpages may be specified in a list included in the proxy server 106 and/or in the detection function. If the user device 101 requests a webpage specified in the list, the proxy server 106 may not modify the webpage to include the command to execute the detection function. As an alternative, the webpage may processed in the proxy server 105 to include the command, but the detection function determines that the webpage is one of the predetermined webpages included in the list, and thereupon, the detection function does not modify the webpage. Thus, the multimedia player function is not executed for the webpages specified in the list.

Further embodiments differ from the embodiments described before in that the detection function is not executed, when a user device 101 is of certain device type but for user devices that have another predefined features. Thus, the proxy server may include a command to invoke the detection function for web pages requested by user device 101 having the predetermined feature. The feature may be limited to single user device and may be one of a predetermined set identification numbers, or the feature may be common to certain group of user devices 101 which may comprise user device of different device types. In principal, which can be directly (using information transmitted from the user device directly) or indirectly (using a look-up table including an allocation between an identification or similar and the feature) determined in the proxy server 106. In particular, the multimedia player function may also be used for rendering multimedia objects in user devices which would support the installation of the special player.

While the invention has been illustrated and described in detail in the drawings and foregoing description, such illustration and description are to be considered illustrative or exemplary and not restrictive; the invention is not limited to the disclosed embodiments. The scope of the invention is defined by the appended claims.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A method for presenting a multimedia object embedded into a web page at a user device, the web page being provided by a content server (105) in a first network, the multimedia object having a predetermined format, wherein a detection function is executed in the user device, the detection function determining that the web page includes the multimedia object of the predetermined format, and based upon the determination a multimedia player function is invoked in the user device, the multimedia player function being adapted to render the multimedia object by converting the multimedia object into a second format, the second format being a standard format that can be rendered by a web browser of the user device, wherein enabling the user device (101) connected to a second network (102) to render the multimedia object involves functions of a proxy server (106) located in the second network (104) through which the user device (102) accesses the first network (103), where a request for the web page is evaluated by the proxy server to determine the device type, whereby the request includes an identification uniquely assigned to the user device (101), the proxy server reads the identification and looks up the device type in a look-up table comprising an allocation between the device type and the unique identification of user devices registered in the proxy server, and modifies the web page if the user device is of a predetermined type to include a command to invoke a program including the detection function, when the web page is received and processed in the web browser of the user device.

2. A method according to claim 1, wherein the program is declared as being cachable to be stored in the cache of the web browser when received once due to the command included in the web page.

3. A method according to claim 1 or 2, wherein every web page provided to the user device of the predetermined type is evaluated by the detection function.

4. A method according to one of the preceding claims, wherein the proxy server provides the detection function to the user device together with the web page.

5. A method according to one of the preceding claims, wherein the server provides the multimedia player function to the user device.

6. A method according to one of the preceding claims, wherein upon detecting the multimedia object, a reference to a further multimedia player is replaced by a reference to the multimedia player function such that the multimedia content is rendered by the multimedia player function.

7. A method according to one of the preceding claims, wherein the user device is a mobile communication device and the proxy server is included in a mobile communication network to which the mobile communication device can be connected.

8. A computer program including software code for executing a method according to one of the preceding claims, when the computer program is run on at least one processor.

9. A system for presenting a multimedia object embedded into a web page at a user device, the web page being provided by a content server (105) in a first network, the system comprising a user device connected to a second network and a proxy server located in the second network, the multimedia object having a predetermined format, wherein a detection function is executed in the user device, the detection function being adapted to determine that the web page includes the multimedia object of the predetermined format, and the system being adapted to provide in the user device a multimedia player function based upon the determination, the multimedia player function being adapted to render the multimedia object by converting the multimedia object into a second format, the second format being a standard format that can be rendered by a web browser of the user device, wherein enabling the user device (101) to render the multimedia object involves functions of a proxy server (106) located in the second network (104) through which the user device (102) accesses the first network (103), where a request for the web page is evaluated by the proxy server to determine the device type, whereby the request includes an identification uniquely assigned to the user device (101), the proxy server reads the identification and looks up the device type in a look-up table comprising an allocation between the device type and the unique identification of user devices registered in the proxy server, and modifies the web page if the user device is of a predetermined type to include a command to invoke a program including the detection function, when the web page is received and processed in the web browser of the user device.

10. A system according to the preceding claim, wherein the proxy server provides the detection function to the user device.

## Patentansprüche

1. Verfahren zum Präsentieren eines in eine Webseite eingebetteten Multimedia-Objekts an einer Benutzervorrichtung, wobei die Webseite von einem Inhaltsserver (105) in einem ersten Netzwerk bereitgestellt wird, wobei das Multimedia-Objekt ein vorbestimmtes Format hat, wobei eine Erfassungsfunktion in der Benutzervorrichtung ausgeführt wird, wobei die Erfassungsfunktion bestimmt, dass die Webseite das Multimedia-Objekt des vorbestimmten Formats enthält, und basierend auf der Bestimmung eine Multimedia-Abspielfunktion in der Benutzervorrichtung aufgerufen wird, wobei die Multimedia-Abspielfunktion angepasst ist, um das Multimedia-Objekt durch Umwandeln des Multimedia-Objekts in ein zweites Format wiederzugeben, wobei das zweite Format ein Standardformat ist, das von einem Webbrowser der Benutzervorrichtung wiedergegeben werden kann, wobei das Ermöglichen des Wiedergebens des Multimediaobjekts durch das mit einem zweiten Netzwerk (102) verbundene Benutzergerät (101) Funktionen eines Proxy-Servers (106) beinhaltet, der sich in dem zweiten Netzwerk (104) befindet, über das das Benutzergerät (102) auf das erste Netzwerk (103) zugreift, wobei eine Anfrage für die Webseite durch den Proxy-Server ausgewertet wird, um den Gerätetyp zu bestimmen, wobei die Anfrage eine Identifikation enthält, die dem Benutzergerät (101) eindeutig zugeordnet ist, der Proxy-Server die Identifikation liest und den Gerätetyp in einer Nachschlagetabelle nachschlägt, die eine Zuordnung zwischen dem Gerätetyp und der eindeutigen Identifikation von im Proxy-Server registrierten Benutzergeräten enthält, und die Webseite modifiziert, wenn das Benutzergerät von einem vorbestimmten Typ ist, um einen Befehl zum Aufrufen eines Programms mit der Erkennungsfunktion zu enthalten, wenn die Webseite empfangen und im Webbrowser des Benutzergeräts verarbeitet wird.

2. Verfahren nach Anspruch 1, wobei das Programm als cachefähig deklariert wird, um im Cache des Webbrowsers gespeichert zu werden, wenn es einmal aufgrund des in der Webseite enthaltenen Befehls empfangen wird.

3. Verfahren nach Anspruch 1 oder 2, wobei jede dem Benutzergerät zur Verfügung gestellte Webseite des vorbestimmten Typs durch die Erkennungsfunktion ausgewertet wird.

4. Verfahren nach einem der vorhergehenden Ansprüche, wobei der Proxy-Server dem Benutzergerät die Erkennungsfunktion zusammen mit der Webseite zur Verfügung stellt.

5. Verfahren nach einem der vorhergehenden Ansprüche, wobei der Server die Multimedia-Player-Funktion für das Benutzergerät bereitstellt.

6. Verfahren nach einem der vorhergehenden Ansprüche, wobei beim Erkennen des Multimedia-Objekts ein Verweis auf einen weiteren Multimedia-Player durch einen Verweis auf die Multimedia-Player-Funktion ersetzt wird, so dass der Multimedia-Inhalt durch die Multimedia-Player-Funktion wiedergegeben wird.

7. Verfahren nach einem der vorhergehenden Ansprüche, wobei das Benutzergerät ein mobiles Kommunikationsgerät ist und der Proxy-Server in einem mobilen Kommunikationsnetz enthalten ist, mit dem das mobile Kommunikationsgerät verbunden werden kann.

8. Computerprogramm mit Softwarecode zur Ausführung eines Verfahrens nach einem der vorhergehenden Ansprüche, wenn das Computerprogramm auf mindestens einem Prozessor ausgeführt wird.

9. System zum Präsentieren eines in eine Webseite eingebetteten Multimedia-Objekts auf einer Benutzervorrichtung, wobei die Webseite von einem Inhaltsserver (105) in einem ersten Netzwerk bereitgestellt wird, wobei das System eine Benutzervorrichtung, die mit einem zweiten Netzwerk verbunden ist, und einen Proxy-Server, der sich in dem zweiten Netzwerk befindet, umfasst, wobei das Multimedia-Objekt ein vorbestimmtes Format aufweist, wobei eine Erfassungsfunktion in der Benutzervorrichtung ausgeführt wird, die Erkennungsfunktion angepasst ist, um zu bestimmen, dass die Webseite das Multimedia-Objekt des vorbestimmten Formats enthält, und das System angepasst ist, um in der Benutzervorrichtung eine Multimedia-Abspielfunktion basierend auf der Bestimmung bereitzustellen, wobei die Multimedia-Abspielfunktion angepasst ist, um das Multimedia-Objekt durch Umwandeln des Multimedia-Objekts in ein zweites Format wiederzugeben, wobei das zweite Format ein Standardformat ist, das durch einen Webbrowser der Benutzervorrichtung wiedergegeben werden kann, wobei das Ermöglichen des Renderns des Multimediaobjekts durch die Benutzervorrichtung (101) Funktionen eines Proxy-Servers (106) beinhaltet, der sich in dem zweiten Netzwerk (104) befindet, über das die Benutzervorrichtung (102) auf das erste Netzwerk (103) zugreift, wobei eine Anfrage für die Webseite durch den Proxy-Server ausgewertet wird, um den Gerätetyp zu bestimmen, wobei die Anfrage eine Identifikation enthält, die der Benutzervorrichtung (101) eindeutig zugeordnet ist, der Proxy-Server die Identifikation liest und den Gerätetyp in einer Nachschlagetabelle nachschlägt, die eine Zuordnung zwischen dem Gerätetyp und der eindeutigen Identifikation von im Proxy-Server registrierten Benutzergeräten enthält, und die Webseite modifiziert, wenn das Benutzergerät von einem vorbestimmten Typ ist, um einen Befehl zum Aufrufen eines Programms einschließlich der Erkennungsfunktion zu enthalten, wenn die Webseite empfangen und im Webbrowser des Benutzergeräts verarbeitet wird.

10. System nach dem vorhergehenden Anspruch, wobei der Proxy-Server die Erkennungsfunktion für das Benutzergerät bereitstellt.

## Revendications

1. Procédé de présentation d'un objet multimédia intégré dans une page Web au niveau d'un dispositif utilisateur, la page Web étant fournie par un serveur de contenu (105) dans un premier réseau, l'objet multimédia ayant un format prédéterminé, dans lequel une fonction de détection est exécutée dans le dispositif utilisateur, la fonction de détection déterminant que la page Web comprend l'objet multimédia du format prédéterminé, et sur la base de la détermination, une fonction de lecteur multimédia est appelée dans le dispositif utilisateur, la fonction de lecteur multimédia étant adaptée pour rendre l'objet multimédia en convertissant l'objet multimédia en un second format, le second format étant un format standard qui peut être rendu par un navigateur Web du dispositif utilisateur, dans lequel le fait de permettre au dispositif utilisateur (101) connecté à un second réseau (102) de rendre l'objet multimédia implique des fonctions d'un serveur mandataire (106) situé dans le second réseau (104) par lequel le dispositif utilisateur (102) accède au premier réseau (103), où une demande de page Web est évaluée par le serveur mandataire pour déterminer le type de dispositif, moyennant quoi la demande comprend une identification attribuée de manière unique au dispositif utilisateur (101), le serveur proxy lit l'identification et recherche le type de dispositif dans une table de consultation comprenant une allocation entre le type de dispositif et l'identification unique des dispositifs d'utilisateur enregistrés dans le serveur proxy, et modifie la page web si le dispositif d'utilisateur est d'un type prédéterminé pour inclure une commande pour appeler un programme comprenant la fonction de détection, lorsque la page web est reçue et traitée dans le navigateur web du dispositif d'utilisateur.

2. Procédé selon la revendication 1, dans lequel le programme est déclaré comme étant cachable pour être stocké dans le cache du navigateur web lorsqu'il est reçu une fois grâce à la commande incluse dans la page web.

3. Procédé selon la revendication 1 ou 2, dans lequel chaque page web fournie au dispositif utilisateur du type prédéterminé est évaluée par la fonction de détection.

4. Procédé selon l'une des revendications précédentes, dans lequel le serveur mandataire fournit la fonction de détection au dispositif utilisateur en même temps que la page web.

5. Procédé selon l'une des revendications précédentes, dans lequel le serveur fournit la fonction de lecteur multimédia au dispositif utilisateur.

6. Procédé selon l'une des revendications précédentes, dans lequel lors de la détection de l'objet multimédia, une référence à un autre lecteur multimédia est remplacée par une référence à la fonction de lecteur multimédia de sorte que le contenu multimédia est rendu par la fonction de lecteur multimédia.

7. Procédé selon l'une des revendications précédentes, dans lequel le dispositif utilisateur est un dispositif de communication mobile et le serveur proxy est inclus dans un réseau de communication mobile auquel le dispositif de communication mobile peut être connecté.

8. Programme informatique comprenant un code logiciel pour exécuter un procédé selon l'une des revendications précédentes, lorsque le programme informatique est exécuté sur au moins un processeur.

9. Système pour présenter un objet multimédia intégré dans une page Web au niveau d'un dispositif utilisateur, la page Web étant fournie par un serveur de contenu (105) dans un premier réseau, le système comprenant un dispositif utilisateur connecté à un deuxième réseau et un serveur proxy situé dans le deuxième réseau, l'objet multimédia ayant un format prédéterminé, dans lequel une fonction de détection est exécutée dans le dispositif utilisateur, la fonction de détection étant adaptée pour déterminer que la page Web comprend l'objet multimédia du format prédéterminé, et le système étant adapté pour fournir dans le dispositif utilisateur une fonction de lecteur multimédia basée sur la détermination, la fonction de lecteur multimédia étant adaptée pour rendre l'objet multimédia en convertissant l'objet multimédia en un second format, le second format étant un format standard qui peut être rendu par un navigateur Web du dispositif utilisateur, dans lequel le fait de permettre au dispositif utilisateur (101) de rendre l'objet multimédia implique des fonctions d'un serveur mandataire (106) situé dans le second réseau (104) par lequel le dispositif utilisateur (102) accède au premier réseau (103), où une requête pour la page Web est évaluée par le serveur mandataire pour déterminer le type de dispositif, moyennant quoi la requête comprend une identification attribuée de manière unique au dispositif utilisateur (101), le serveur proxy lit l'identification et recherche le type de dispositif dans une table de consultation comprenant une allocation entre le type de dispositif et l'identification unique des dispositifs d'utilisateur enregistrés dans le serveur proxy, et modifie la page web si le dispositif d'utilisateur est d'un type prédéterminé pour inclure une commande pour appeler un programme comprenant la fonction de détection, lorsque la page web est reçue et traitée dans le navigateur web du dispositif d'utilisateur.

10. Système selon la revendication précédente, dans lequel le serveur proxy fournit la fonction de détection au dispositif utilisateur.
